# EUROPEAN PATENT APPLICATION

(11) **EP 3 002 316 A1**
(43) Date of publication of application: **06.04.2016**
(21) Application number: 14187669.8
(22) Date of filing: 03.10.2014
(51) Int. Cl.: C08L 81/00, C08K 3/00, C08K 5/00, C08L 81/06, B32B 27/00, C08J 5/00

(54) **Polyphenylsulphone Compositions**

(71) Applicant: 3M Innovative Properties Company, Saint Paul, MN 55133-3427 (US)
(72) Inventor: Jinks, Philip A., Loughborough, Leicestershire LE11 1EP (GB)
(74) Representative: Bergen, Katja

(57) **Abstract**

Compositions comprising polyphenylsulphone and a solvent are described. The polyphenylsulphone is in solution in the solvent and the solvent comprises a 5-membered, aliphatic, cyclic or heterocyclic ketone. Methods for applying such compositions to a substrate, and articles comprising a substrate having a surface and a coating of polyphenylsulphone on the surface of the substrate are also described.

## Description

### FIELD

The present disclosure relates to compositions comprising polyphenylsulphone and a solvent comprising a 5-membered, aliphatic, cyclic or heterocyclic ketone, methods for applying such compositions to a substrate, and articles having a coating comprising polyphenylsulphone.

### SUMMARY

Briefly, in one aspect, the present disclosure provides a composition comprising polyphenylsulphone and a solvent, wherein the polyphenylsulphone is in solution in the solvent. Generally, the solvent has a Hildebrand Solubility Parameter of at least 20.5 MPa^{0.5} and at most 25 MPa^{0.5}, and comprises at least 20% by volume of at least one 5-membered, aliphatic, cyclic or heterocyclic ketone, based on the total volume of solvent. In some embodiments, the solvent comprises the 5-membered, aliphatic, cyclic or heterocyclic ketone in an amount of greater than 70 %, e.g., greater than 80% by volume, based on the total volume of solvent. In some embodiments, the solvent comprises less than 5 volume % of a linear aliphatic ketone, based on the total volume of solvent. In some embodiments, the solvent has a Hildebrand Solubility Parameter of at least 21 MPa^{0.5} and at most 23.5 MPa^{0.5}.

In some embodiments, the polyphenylsulphone is in solution in the solvent in an amount of at least 9 weight %, e.g., at least 12 weight %, based on the total weight of the composition. In some embodiments, the polyphenylsulphone is in solution in the solvent in an amount of less than 20 weight %, based on the total weight of the composition.

In some embodiments, the 5-membered, aliphatic, cyclic ketone comprises cyclopentanone. In some embodiments, the 5-membered, aliphatic, heterocyclic ketone comprises a γ lactone (gamma lactone), e.g., γ -butyrolactone. In some embodiments, the 5-membered, aliphatic, heterocyclic ketone comprises a γ lactam (gamma lactam), e.g., a pyrrolidone, e.g., 2- pyrrolidone. In some embodiments, an alkyl substituted 2- pyrrolidone may be used, e.g., N-alkyl-2-pyrrolidone.

In another aspect, the present disclosure provides a method for applying a composition to a substrate, the method comprising contacting a surface of a substrate with any of the polyphenylsulphone compositions as described herein, and removing at least a portion of the solvent, optionally wherein removing at least a portion of the solvent comprises drying. In some embodiments, the method comprising providing a casting medium as the substrate, contacting a surface of the casting medium with any of the polyphenylsulphone compositions as described herein, drying the composition to remove at least a portion of the solvent and, optionally removing the casting medium.

In yet another aspect, the present disclosure provides an article comprising a substrate having a surface and a coating of polyphenylsulphone on the surface of the substrate, e.g., on the inner surface of a container. In some embodiments, the container is a medicament container, e.g., a metered dose inhaler canister. In some embodiments, the container contains one or more of a medicament, a non-CFC propellant composition, and an acid.

The above summary of the present disclosure is not intended to describe each embodiment of the present invention. The details of one or more embodiments of the invention are also set forth in the description below. Other features, objects, and advantages of the invention will be apparent from the description and from the claims.

### DETAILED DESCRIPTION

Polysulphones are known as having good heat resistance, dimensional stability and flame retardance. One polysulphone, polyethersulphone, finds use in coating materials, paints and films especially in water treatment membranes. Coating materials and films of polysulphone are often produced from a solution of the polysulphone. Generally, there is a need for the polysulphone to remain in solution for a period of time sufficient to allow for supply chain and production delay situations, without gelling in its container.

Unfortunately, it has proven difficult to find a simple and environmentally benign solvent system that is generally applicable for polysulphones. For example, USA-2004/0081846 discloses a polysulphone resin solution, but requires using a three-component solvent system. In addition, there is a need for compositions of polysulphones other than polyethersulphone.

In some embodiments, polyphenylsulphone is particularly advantageous because of its excellent mechanical and chemically resistant properties. Polyphenylsulphone has essentially the formula (1) below capped by end groups. 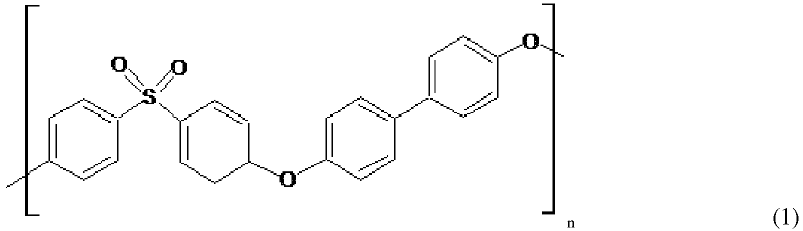 The structure in square brackets is a repeating unit, repeated n times. Typically, the polyphenylsulphones used in some embodiments have a weight average molecular weight in the range 10,000 to 80,000. Generally, a higher concentration of polyphenylsulphone in solvent-based compositions is possible at the lower end of the molecular weight range. Thus polyphenylsulphones having a weight average molecular weight in the range 10,000 to 30,000 may be advantageous.

The polyphenylsulphone may be combined with other polymeric materials, such as polyethersulphones, or a fluoropolymer, e.g., PTFE, FEP or PFA. However, in some embodiments, it may be preferred not to include a fluoropolymer. In some embodiments, the polyphenylsulphone compositions may consist essentially of a polyphenylsulphone and a solvent, wherein the polyphenylsulphone is in solution in the solvent.

The present disclosure accordingly provides a composition comprising polyphenylsulphone and a solvent, wherein the polyphenylsulphone is in solution in the solvent. As used herein, "solvent" refers to both a single solvent as well as combinations of two or more solvents. Generally, the solvent comprises at least one 5-membered, aliphatic, cyclic or heterocyclic ketone. In some embodiments, the solvent comprises less than 10 volume %, e.g., less than 5 volume % of a linear aliphatic ketone based on the total volume of solvent.

In some embodiments, the 5-membered, aliphatic, cyclic ketone is saturated. Examples of 5-membered, aliphatic, cyclic ketones include cyclopentanone, and substituted cyclopentanones. In some embodiments, the substituted cyclopentanones may be substituted with alkyl groups such as 2-methyl-cyclopentanone, 3-methyl-cyclopentanone, and 2-ethyl-cyclopentanone. Generally, the alkyl group may contain up to ten carbon atoms. In some embodiments, the substituted cyclopentanones may be substituted with groups containing one or more heteroatoms, such as 2-[1-(5-methyl-2-furyl)butyl]cyclopentanone.

In some embodiments, the 5-membered, aliphatic, heterocyclic ketone is saturated. The 5-membered, aliphatic, heterocyclic ketone may include an oxygen atom, a nitrogen atom or a sulphur atom. An example of one with an oxygen atom is γ-butyrolactone. Examples with a nitrogen atom include a pyrrolidone, such as a 2- pyrrolidone. For those with a sulphur atom, an example is tetrahydrothiophenone or a derivative thereof. The 5-membered, aliphatic, heterocyclic ketone may have more than one non-carbon atom in the ring, such as an oxazolidinone, a thiazolidonone, or an imidazolinone.

In some embodiments, the 5-membered, aliphatic, heterocyclic ketone, e.g., a saturated heterocyclic ketone, may be substituted with an alkyl group including such containing one or more heteroatoms. In some embodiments, the alkyl group may contain up to ten carbon atoms. Examples include alkyl substituted 2- pyrrolidone, for example N-alkyl-2-pyrrolidone, e.g., N-methyl-2-pyrrolidone

In some embodiments, the solvent may comprise two or more 5-membered, aliphatic, cyclic or heterocyclic ketones. In some embodiments, the solvent comprises the 5-membered, aliphatic, cyclic or heterocyclic ketone(s) in an amount of at least 40 % by volume, e.g., at least 60 %, or even greater than 70 % by volume, based in the total volume of the solvent. For example, in some embodiments, the solvent may comprise the 5-membered, aliphatic, cyclic or heterocyclic ketone(s) in an amount of greater than 71 % by volume, e.g., greater than 75 % and even greater than 80 % by volume, based on the total volume of solvent. In some embodiments, the solvent will comprise the 5-membered, aliphatic, cyclic or heterocyclic ketone(s) in large excess for example greater than 85 % by volume, e.g., greater than 90%, greater than 95%, or even greater than 99% by volume, each of these percentages based on the total volume of solvent.

In some embodiments, the solvent comprises cyclopentanone. Thus, in some aspects, the present disclosure provides a composition comprising polyphenylsulphone and a solvent, wherein the polyphenylsulphone is dissolved in the solvent and the solvent comprises cyclopentanone. Other components may or may not be deliberately added to the solvent. Thus, in some embodiments, the solvent may consist essentially of cyclopentanone.

In some embodiments, the 5-membered, aliphatic, cyclic or heterocyclic ketone(s) may be combined with a miscible cosolvent. In some embodiments, the cosolvent may include a cyclic or heterocyclic ketone, e.g., an aliphatic, cyclic or heterocyclic ketone, other than a 5-membered cyclic or heterocyclic ketone. For example, in some embodiments, the cosolvent may comprise cyclohexanone.

In some embodiments, the cosolvent may be a linear aliphatic ketone. However, the present inventors have discovered that linear aliphatic ketones are not required to obtain solubility in compositions containing polyphenylsulphones. In some embodiments, the presence of linear aliphatic ketones may hinder the solubility of polyphenylsulphones. Therefore, in some embodiments, the solvent comprises less than 20 volume %, e.g., less than 10 volume % of a linear aliphatic ketone, based on the total volume of solvent. In some embodiments, the solvent comprises less than 5 volume % of a linear aliphatic ketone, e.g., in some embodiments less than 4 volume %, or even less than 1 volume % of a linear aliphatic ketone, each of these percentages based on the total volume of solvent.

### Solubility Parameter

As long as the solvent comprises at least one 5-membered, aliphatic, cyclic or heterocyclic ketone, the Hildebrand solubility parameter may be used to assist in the selection of suitable solvents. Hildebrand Solubility Parameter is a well-known parameter, calculated as the square root of the cohesive energy density of the solvent, where the cohesive energy density is the molar internal energy of vaporization divided by the molar volume and may be expressed in SI units of Megapascals (MPa^{1/2}). Suitable values may be obtained from Burrell, H., Solubility parameter values, in Polymer Handbook, Brandrup, J. and Immergut, E. H., Eds., John Wiley & Sons-Interscience, New York, 1966, IV-341. For mixtures, Hildebrand Solubility Parameter may be calculated by weighting the individual solubility parameters of the constituents according to their volume fraction in the solvent mixture.

In some embodiments, the solubility parameter of the solvent mixture is in the range of 20.5 to 25 MPa^{0.5}, inclusive (i.e., at least 20.5 MPa^{0.5} and no greater than 25 MPa^{0.5}). In some embodiments, the solubility parameter of the solvent mixture is in the range of 21 to 24 MPa^{0.5}, inclusive and in some embodiments in the range of 21.5 to 23.5 MPa^{0.5}, inclusive and in some embodiments in the range from 22 to 23 MPa^{0.5}, inclusive.

In some embodiments, the polyphenylsulphone may be in solution in the solvent in an amount of less than 20 weight %, less than 18 weight %, less than 17.5 weight %, or even less than 15 weight %, each of these percentages based on the total weight of the composition. In some embodiments, there will be greater than 1 weight % polyphenylsulphone in solution, for example, greater than 2 weight %, greater than 3 weight % , or even greater than 5 weight % polyphenylsulphone in solution, each of these percentages based on the total weight of composition. In some embodiments, the polyphenylsulphone may be in solution in the solvent in an amount of at least 9 weight %, more preferably at least 12 weight % , each of the percentages based on the total weight of the composition. Thus, in some embodiments, preferred ranges of polyphenylsulphone in solution (all in weight % based upon the total weight of the composition) are: 1 to 20, 2 to 20, 3 to 20, 5 to 20, 1 to 18, 2 to 18, 3 to 18, 5 to 18, 1 to 17.5, 2 to 17.5, 3 to 17.5, 5 to 17.5, 1 to 15, 2 to 15, 3 to 15, 5 to 15, 1 to 10, 2 to 10, 3 to 10, and 5 to 10. Desirably the above percentages and ratios of polyphenylsulphone remain in solution without gelling for at least 1 day, e.g., at least 5 days.

In some embodiments, compositions according to the present disclosure find particular use in coating substrates or in casting films of polyphenylsulphone.

Thus, in another aspect, the present disclosure provides methods for applying compositions a substrate, the methods comprising contacting the substrate with any of the polyphenylsulphone compositions as discussed or otherwise disclosed herein. The contacting may comprise coating by any known methods including, e.g., spraying, brushing, dipping or pouring the polyphenylsulphone composition; and removing at least a portion of the solvent by, e.g., drying. If spraying is employed, it may require separate stages of spraying in different directions relative to the articles to be coated, to allow effective coverage of differently orientated surfaces. Optionally, the coating may subsequently be heated to enhance the flow of the coating composition across the surface of the substrate and/or to drive off solvent. In some embodiments, the resulting polyphenylsulphone coating is typically in the range 1 µm (microns) to 100 µm thick. In some embodiments, the coating thickness is in the range 1 µm to 25 µm.

In a further aspect, the present disclosure provides methods of casting a film of polyphenylsulphone, the methods comprising contacting the casting medium with a polyphenylsulphone composition as discussed or otherwise disclosed herein, and removing at least a portion of the solvent by e.g., drying the composition. Optionally, the method may include removing the casting medium. It may be advantageous if the casting medium is of low adhesion to polyphenylsulphone to aid removal.

A particularly advantageous use of polyphenylsulphone compositions according to the present disclosure is in coating substrates to provide corrosion resistant coatings. Such corrosion resistance results from the coating being impermeable to corrosive species, e.g. acids, and by being perforation free. In some embodiments, in use, the substrate can be dented severely, and yet surprisingly maintain the impermeable and perforation free characteristics of the coating. Substrates include containers (including the lids) and in particular containers that may contain medicaments. Substrates may be any suitable material, for example metal, plastics, or glass.

Thus, in another aspect, the present disclosure provides an article which includes a container having a surface, e.g., an inner surface, coated with a composition comprising polyphenylsulphone. In some embodiments, the container may be a medicament container, for example a canister for use in a metered dose inhaler. In some embodiments, the surfaces that will come into contact with medicament are thus coated, and it may be economical to avoid coating surfaces that are not contacted by medicament in use, such as surfaces external to the seal between the ferrule and the canister. In some embodiments, at least part of a ferrule that is used to fasten a metering valve to the canister may have the coating applied.

Metered dose inhalers may contain non-CFC propellant-based medicament formulations. The non-CFC propellant-based formulations typically comprise HFA134a (1,1,1,2-tetrafluoroethane) or HFA 227ea (1,1,1,2,3,3,3-heptafluoropropane) or mixtures thereof. Formulations may either contain the drug in solution or in suspension, or both if there is more than one drug. Many such formulations contain ethanol as a cosolvent or co-suspending aid. Some also contain glycerol, and formulations may also include a surfactant e.g. oleic acid, polyvinylpyrrolidone, polyethylene glycol. Other excipients such as flavorings are possible.

Some formulations contain an acid and/or added water to help protect dissolved drugs from undergoing chemical degradation. The acid may be an organic acid e.g. ascorbic acid, citric acid, or a mineral acid e.g. hydrochloric acid.

Non-CFC propellant compositions in pressurized metered dose inhalers may render the container of the product susceptible to corrosion or catalytic degradation of the drug. In such instances to eliminate such instabilities, containers coated with polyphenylsulphone in accordance with various aspects of the present disclosure are particularly suitable. In addition to providing corrosion protection, the polyphenylsulphone coating affords suitable low levels of extractables into contained non-CFC propellant-based medicament formulations.

Certain illustrative embodiments of the present disclosure are illustrated by the following Examples.

### EXAMPLES

The solubility properties of polyphenylsulphones (PPSU) were evaluated in solvents. Two polyphenylsulphones were selected: Radel™ R5000 NT PPSU and Radel™ 5900 NT PPSU, both obtained from Solvay Speciality Polymers. Details of the materials, the amounts and the example numbers are shown in Table 1, while the experimental procedures are detailed below by experiment method number.

The following parameters were used to calculate the Hildebrand Solubility Parameter (HSP) of the various solvent systems.

| Solvent | Density (gm/ml) | HSP (MPa^{1/2}) | 5-membered, aliphatic, cyclic or heterocyclic ketone |
|---|---|---|---|
| cyclopentanone | 0.95 | 21.2 | Yes |
| γ-butyrolactone | 1.13 | 25.7 | Yes |
| cyclohexanone | 0.95 | 20.3 | No |
| methylethyl ketone | 0.80 | 19.0 | No |
| N-methyl-2-pyrrolidone | 1.03 | 23.0 | Yes |
| ethanol | 0.79 | 26.0 | No |
| acetone | 0.79 | 20.3 | No |
| acetonitrile | 0.79 | 24.3 | No |

Experimental Method 1. Lacquer systems were prepared by adding the Radel™ R5900 NT PPSU to the solvent in 50 ml glass sample bottles with polypropylene screw capped lids. Each sample bottle was then placed in a shaking water bath at 70 °C for 6 hours. The samples were then removed from the water bath and examined at room temperature. Further examination was done after 5 days standing at room temperature.
Experimental Method 2. Lacquer systems were prepared by adding the Radel™ R5900 NT PPSU to the solvent in 50 ml glass sample bottles with polypropylene screw capped lids. Each sample bottle was then placed in a shaking water bath at 70 °C for 4 hours. The samples were then removed from the water bath and examined at room temperature.
Experimental Method 3. Lacquer systems were prepared by adding the Radel™ R5900 NT PPSU to the solvent in 50 ml glass samples bottle with polypropylene screw capped lids. Each sample bottle was then placed in a shaking water bath at 60°C for 1 hour. The samples were then removed from the water bath and examined at room temperature.

**Table 1: Example compositions.**

| | PPSU | | Method | Solvent (grams) | | | Vol.% 5-membered cyclic ketone |
|---|---|---|---|---|---|---|---|
| Ex. no. | (g) | % w/w | | Cyclopentanone | γ-butyrolactone | Cyclohexanone | |
| EX-1 | 1.5 | 13 | 1 | 10 | 0 | 0 | 100% |
| CE-1a | 1.5 | 13 | 1 | 0 | 0 | 10 | 0% |
| EX-2 | 1 | 9.1 | 1 | 0 | 4 | 6 | 36% |
| EX-3 | 1.5 | 13 | 1 | 0 | 4 | 6 | 36% |
| EX-4 | 1 | 9.1 | 1 | 6 | 4 | 0 | 100% |
| EX-5 | 1.5 | 13 | 1 | 6 | 4 | 0 | 100% |
| EX-6 | 1.5 | 13 | 2 | 8 | 2 | 0 | 100% |
| EX-7 | 1.5 | 13 | 2 | 4 | 6 | 0 | 100% |
| EX-8 | 1.5 | 13 | 2 | 0 | 6 | 4 | 56% |
| EX-9 | 1 | 9.1 | 3 | 10 | 0 | 0 | 100% |
| EX-10 | 8 | 17.6* | 3 | 32 | 0 | 0 | 100% |
| EX-11** | 1 | 9.1 | 3 | 10 | 0 | 0 | 100% |

| | | | | | | | |
|---|---|---|---|---|---|---|---|
| * Clear supernatant, decanted for further evaluation ** Radel™ R5000NT PPSU was used | | | | | | | |

The samples of Table 1 were evaluated and the results are summarized in Table 2, along with the calculated Hildebrand solubility parameter of the solvent system used.

**Table 2: Summary of Results**

| example no. | Results | HSP (MPa^{1/2}) |
|---|---|---|
| EX-1 | Fully solubilized, and after 5 days standing at room temperature remained clear and non-gelled | 21.2 |
| CE-1a | Partially solubilized, but after 5 days standing at room temperature almost total gelling | 20.3 |
| EX-2 | Fully solubilized, and after 5 days standing at room temperature remained clear and non-gelled | 22.2 |
| EX-3 | Fully solubilized, and after 5 days standing at room temperature remained clear and non-gelled | 22.2 |
| EX-4 | Fully solubilized, and after 5 days standing at room temperature remained clear and non-gelled | 22.8 |
| EX-5 | Fully solubilized, and after 5 days standing at room temperature remained clear and non-gelled | 22.8 |
| EX-6 | Mainly clear solution with trace insolubility | 22.0 |
| EX-7 | Opalescent solution with some further particulate insolubility | 23.7 |
| EX-8 | Opalescent solution | 23.3 |
| EX-9 | Full dissolution, no gelling after 3 weeks | 21.2 |
| EX-10 | Supernatant clear solution decanted for use | 21.2 |
| EX-11 | Full dissolution | 21.2 |

Example 12 was a sample of Radel™ 5000 NT PPSU (1 g) in N-methyl-2-pyrrolidone (NMP) (10 g). Example 13 was a sample of Radel™ 5900 NT PPSU (1 g) in N-methyl-2-pyrrolidone (NMP) (10 g). The procedure of Experimental Method 3 was applied. In both Examples 12 and 13, the PPSU dissolved fully with no evidence of gelling.

### Addition of Linear Aliphatic Ketones.

Experimental Method 4. Lacquer systems were prepared by adding the Radel™ R5900 NT PPSU to the solvent in 50 ml glass sample bottles with polypropylene screw capped lids. Each sample bottle was then placed in a shaking water bath at 64 - 65°C for 4 hours. The samples were then removed from the water bath and examined at room temperature. The procedure was used for examples EX-14 through EX-19, which contained increasing amounts of a linear aliphatic ketone and some of which are comparative examples. The compositions and results are summarized in Table 3.

**Table 3: Loss of solubility with increasing amounts of linear aliphatic ketone.**

| Example | EX-14 | EX-15 | EX-16 | EX-17 | EX-18+ | EX-19+ |
|---|---|---|---|---|---|---|
| Radel™ R5900NT PPSU (g) | 1.5 | 1.5 | 1.5 | 1.5 | 1.5 | 1.5 |
| Cyclopentanone (g) | 10 | 9.5 | 9.0 | 8.0 | 6.0 | 0 |
| Methyl ethyl ketone (g) | 0 | 0.5 | 1.0 | 2.0 | 4.0 | 10 |
| Vol% 5-membered cyclic ketone | 100% | 94% | 88% | 77% | 56% | 0% |
| Results | full dissolution | full dissolution | full dissolution | incomplete dissolution | Substantially insoluble | No sign of dissolution |

| | | | | | | |
|---|---|---|---|---|---|---|
| + Comparative examples | | | | | | |

Additional samples were prepared using the Radel™ R5900 NT PPSU (unless otherwise indicated in Table 4) and substantially the same procedure. Table 4 summarizes the compositions and results. Based on the observations, a score of 0 to 5 was assigned to each sample indicating the relative solubility of the PPSU, with 5 being the most soluble. As shown, the present inventors have discovered that both the vol.% of 5-membered cyclic ketone and the Hildebrand Solubility Parameter are important.

**Table 4: Relative solubility of PPSU in solvent comprising a 5-membered cyclic ketone.**

| Vol% 5-membered cyclic ketone | Calculated HSB MPa^{0.5} | Wt.% PPSU | Visual Observations | Relative Score | Comment |
|---|---|---|---|---|---|
| 0% | 19.0 | 9.1 | No sign of dissolution | 0 | EX-19+ |
| 56% | 20.2 | 9.1 | Substantially insoluble | 1 | EX-18+ |
| 0% | 20.3 | 13 | Almost total gelling of the material that had been partially solubilised | 1 | CE-1a |
| 0% | 20.3 | 13 | Formulation a completely solid white gel | 0 | |
| 77% | 20.8 | 9.1 | Incomplete dissolution | 3 | EX-17 |
| 88% | 21.0 | 9.1 | Full dissolution | 5 | EX-16 |
| 94% | 21.1 | 9.1 | Full dissolution | 5 | EX-15 |
| 18% | 21.2 | 9.1 | Some dissolution | 2 | * |
| 18% | 21.2 | 9.1 | Little dissolution | 2 | |
| 17% | 21.2 | 13 | Some PPSU in solution but a dense gelled layer at base of vial | 2 | |
| 100% | 21.2 | 9.1 | Full dissolution, no gelling after 3 weeks | 5 | EX-9 |
| 100% | 21.2 | 17.6 | Most dissolved, supernatant | 5 | EX-10 |
| 100% | 21.2 | 13 | Clear non-gelled solution | 5 | EX-1 |
| 100% | 21.2 | 13 | Clear solution | 5 | |
| 100% | 21.2 | 9.1 | Full dissolution | 5 | EX-14 |
| 100% | 22.0 | 13 | Mainly clear solution with trace insolubility | 4 | EX-6 |
| 37% | 22.2 | 9.1 | Significant dissolution | 4 | |
| 36% | 22.2 | 9.1 | Some dissolution | 3 | * |
| 36% | 22.2 | 9.1 | Lacquer formulation was in complete solution. | 5 | EX-2 |
| 36% | 22.2 | 13 | Lacquer formulation was in complete solution. | 5 | EX-3 |
| 36% | 22.2 | 13 | Mainly in solution but small amount of swollen PPSU at base of vial | 4 | |
| 100% | 22.8 | 9.1 | Lacquer formulation was in complete solution. | 5 | EX-4 |
| 100% | 22.8 | 13 | Lacquer formulation was in complete solution. | 5 | EX-5 |
| 100% | 22.8 | 13 | Mainly clear solution with trace insolubility | 4 | |
| 100% | 23.0 | 9.1 | Fully dissolved, no evidence of gelling | 5 | EX-12* |
| 100% | 23.0 | 9.1 | Fully dissolved, no evidence of gelling | 5 | EX-13 |
| 56% | 23.3 | 9.1 | Solution after 7 weeks ageing, | 5 | * |
| 56% | 23.3 | 13 | Slightly opaque solution | 3 | EX-8 |
| 100% | 23.7 | 13 | Slightly opaque solution with some further particulate insolubility | 3 | EX-7 |
| 76% | 24.4 | 9.1 | Significant dissolution | 4 | |
| 77% | 24.4 | 9.1 | Some dissolution | 3 | * |
| 77% | 24.4 | 13 | Viscous very opaque fluid | 2 | |
| 100% | 24.7 | 13 | White opaque fluid | 2 | |
| 100% | 25.7 | 13 | Almost total gelling of the material that had been partially solubilised | 1 | |
| 100% | 25.7 | 13 | Significant insolubility - dense swollen PPSU particles on base of vial | 0 | |
| 100% | 25.7 | 13 | Large amount of sold gel at base of vial | 0 | |

| | | | | | |
|---|---|---|---|---|---|
| + EX-18 and EX-19 are comparative examples * Radel™ 5000 NT PPSU used | | | | | |

Further experiments were performed exploring whether solubility parameter alone is sufficient to achieve solubility of PPSU. In particular, as shown in Table 4, solvents having a solubility parameter between about 21 and 23.5 MPa^{1/2} exhibited the best solubility, particularly when the volume percent of 5-membered cyclic ketone was greater than 20%. Solvents having a Hildebrand Solubility Parameter (HSP) near the mid-point of this range were prepared. These systems used a variety of solvents excluding 5-membered cyclic ketones.

### Using a mixture of ethanol and methyl ethyl ketone.

Ethanol: HSP = 26.0, density = 0.79 g/ml
Methyl ethyl ketone: HSP = 19.0, density = 0.805 g/ml

A solvent mixture of methyl ethyl ketone (68.3g) and ethanol (57.5 g) was prepared. This has a calculated Hildebrand solubility parameter of 22.2 MPa^{1/2}. An aliquot (10g) of this was placed in a glass 50 ml sample vial along with Radel™ 5900NT PPSU (1.5g). The filled vial was capped and was placed into a shaking water bath at 65 °C for 4 hours.

Examination of the vial after 4 hours showed no evidence of dissolution of the PPSU. The pearly granules showed no adhesion to one another which is the first sign of solubility.

### Using a mixture of acetone and acetonitrile.

Acetone: HSP = 20.3, density = 0.791g/ml
Acetonitrile HSP = 24.3 density = 0.786g/ml

A solvent mixture of acetone (37.5g) and acetonitrile (41.2g) was prepared. This has a calculated Hildebrand solubility parameter of 22.4 MPa^{1/2}. An aliquot (10 g) of this was placed in a glass 50 ml sample vial along with Radel™ 5900NT PPSU (1.5g). The filled vial was capped and was placed into a shaking water bath at 65 °C for 4 hours.

Again, examination of the vial after 4 hours showed no evidence of dissolution of the PPS. The pearly granules showed no adhesion to one another which is the first sign of solubility.

### Canister coating with Radel™ 5900 PPSU and corrosion testing.

Several 19 ml aluminum canisters for metered dose inhalers were cleaned as follows. Canisters were immersed in HFE72DE at its boiling temperature (43 °C) for 7 minutes. They were allowed to drain for 2 minutes, and then re-immersed for 3 minutes with ultrasonic agitation. These were allowed to drain for a further 4 minutes then dried at ambient conditions for 7 minutes.

Cleaned canisters were fill and drain coated with the supernatant of Example 10 as follows. The first canister was filled to the brim and the lacquer was then transferred sequentially to 2 other canisters. The canisters were then left to stand and drain onto lab wipes for 5 minutes in the open end down orientation. The canisters were then turned upright for a further 5 minutes and then down once again for 5 minutes and finally upright for 5 minutes. This procedure was performed to provide a more even coating of lacquer than would be achieved by simply standing in one orientation. The canisters were then left to stand upright in the fume cupboard for 48 hours.

One of the canisters was then dented from the outer side by using the angled edge of a screwdriver impacted by a hammer, and also crimped at the base to create massive deformation and stressing of the polyphenylsulphone coating. The deformed canister was then subjected to the following acidified copper sulphate solution corrosion test.

### Corrosion Test Method:

### Preparation of corrosion test solution:

Copper sulphate pentahydrate (78g) and concentrated hydrochloric acid (37% solution in water) (20ml) were added in a beaker to deionised water (400ml) and made up to a final total solution volume with deionised water of 500ml.

### Performance of the corrosion test:

The test was performed by filling test canisters to the brim with the above solution and letting the solution stand for 1 minute after which time the corrosion test solution was tipped to waste and the canister was rinsed with 3 rinses of tap water and then left to air dry. The canisters were then sectioned using a hack saw and the internal surfaces examined closely.

The test was passed with no corrosion at all being evident and no delamination of the coating.

### Representative Embodiments.

1. A composition comprising polyphenylsulphone and a solvent, wherein the polyphenylsulphone is in solution in the solvent, wherein the solvent has a Hildebrand Solubility Parameter of at least 20.5 MPa^{0.5} and at most 25 MPa^{0.5}, and comprises at least 20% by volume of a 5-membered, aliphatic, cyclic or heterocyclic ketone based on the total volume of solvent.
2. The composition of embodiment 1, wherein the solvent comprises the 5-membered, aliphatic, cyclic or heterocyclic ketone(s) in an amount of greater than 70 % by volume based on the total volume of solvent, e.g., in an amount of greater than 71%, greater than 75 %, greater than 80 %, greater than 85 %, greater than 90%, greater than 95%, or even greater than 99% by volume, each of these percentages based on the total volume of solvent.
3. The composition as described in any one of the preceding embodiments, wherein the solvent comprises less than 10 volume %, e.g., less than 5 volume %, of a linear aliphatic ketone, based on the total volume of solvent.
4. The composition as described in any one of the preceding embodiments, wherein the solvent has a Hildebrand Solubility Parameter of at least 21 MPa^{0.5}, more preferably at least 21.5 MPa^{0.5}.
5. The composition as described in any one of the preceding embodiments, wherein the solvent has a Hildebrand Solubility Parameter of at most 24.5 MPa^{0.5}, e.g., at most 24, or even at most 23.5 MPa^{0.5}
6. The composition as described in any one of the preceding embodiments, wherein the solvent comprises cyclopentanone.
7. The composition as described in embodiment 6, wherein the solvent consists essentially of cyclopentanone.
8. The composition as described in any one of the preceding embodiments, wherein the solvent comprises γ-butyrolactone.
9. The composition as described in any one of the preceding embodiments, wherein the solvent comprises a γ lactam, optionally wherein the γ lactam comprises pyrrolidone, e.g., 2-pyrrolidone, e.g., alkyl substituted 2- pyrrolidone, e.g., N-alkyl-2-pyrrolidone.
10. The composition as described in embodiment 8, wherein the solvent consists essentially of N-methyl-2-pyrrolidone.
11. The composition as described in any one of the preceding embodiments, wherein the polyphenylsulphone is in solution in the solvent in an amount of less than 20 weight %, based on the total weight of the composition, e.g., less than 18 weight %, less than 17.5 weight %, or even less than 15 weight %, based on the total weight of the composition.
12. The composition as described in any one of the preceding embodiments, wherein the polyphenylsulphone is in solution in the solvent in an amount of at least 9 weight %, preferably at least 12 weight %, based on the total weight of the composition.
13. A method for applying a composition to a substrate, the method comprising
   contacting a surface of a substrate with the composition as described in any one of the preceding embodiments, and
   removing at least a portion of the solvent, optionally wherein removing at least a portion of the solvent comprises drying.
14. The method for applying a composition to a substrate as described in embodiment 13, the method comprising providing a casting medium as the substrate, contacting a surface of the casting medium with the composition as described in any one of embodiments 1 to 12, drying the composition to remove at least a portion of the solvent and, optionally removing the casting medium.
15. An article prepared by the method according to any one of embodiments 13 and 14.
16. An article comprising a substrate having a surface and a coating of polyphenylsulphone on the surface of the substrate.
17. The article as described in embodiments 15 or 16, wherein the article comprises a container having an inner surface coated with polyphenylsulphone.
18. The article as described in embodiment 17, wherein the container is a medicament container.
19. The article as described in embodiment 18, wherein the container is a metered dose inhaler canister.
20. The article as described in any one of embodiments 15 to 19, wherein the article comprises a valve and wherein the coating of polyphenylsulphone is on a surface of the valve.
21. The article as described in any one of embodiments 15 to 20, wherein the article comprises a ferrule connecting a valve to a container, wherein the coating of polyphenylsulphone is on a surface of the ferrule.
22. The article as described in any one of embodiments 18 to 21, wherein the container contains a medicament.
23. The article as described in any one of embodiments 18 to 22, wherein the container contains a non-CFC propellant composition.
24. The article as described in any one of embodiments 18to 23, wherein the container contains an acid.

It is to be understood that the specification is not limited to the embodiments described above and that various modifications can be made without departing from the principles or concepts of the specification.

Polyphenylsulphone compositions and coatings as disclosed in the specification may include any feature described herein separately or in combination with any other feature(s), if necessary with appropriate modification of other features, as would be readily apparent to the skilled person.

## Claims

1. A composition comprising polyphenylsulphone and a solvent, wherein the polyphenylsulphone is in solution in the solvent, wherein the solvent has a Hildebrand Solubility Parameter of at least 20.5 MPa^{0.5} and at most 25 MPa^{0.5}, and comprises at least 20% by volume of a 5-membered, aliphatic, cyclic or heterocyclic ketone, based on the total volume of solvent.

2. The composition as claimed in claim 1, wherein the solvent comprises the 5-membered, aliphatic, cyclic or heterocyclic ketone in an amount of greater than 70 % by volume, based on the total volume of solvent.

3. The composition as claimed in any one of the preceding claims, wherein the solvent comprises less than 5 volume % of a linear aliphatic ketone, based on the total volume of solvent.

4. The composition as claimed in any one of the preceding claims, wherein the solvent has a Hildebrand Solubility Parameter of at least 21 MPa^{0.5} and at most 24.5 MPa^{0.5}.

5. The composition as claimed in any one of the preceding claims, wherein the solvent comprises cyclopentanone.

6. The composition as claimed in claim 5, wherein the solvent consists essentially of cyclopentanone.

7. The composition as claimed in any one of claims 1 to 5, wherein the solvent comprises γ-butyrolactone.

8. The composition as claimed in any one of claims 1 to 5, and 7, wherein the solvent comprises a γ lactam, and the γ lactam comprises a pyrrolidone.

9. The composition as claimed in claim 8, wherein the pyrrolidone is an alkyl substituted 2- pyrrolidone.

10. The composition as claimed in any one of claims 1 to 4, wherein the solvent consists essentially of N-methyl-2-pyrrolidone.

11. The composition as claimed in any one of the preceding claims, wherein the polyphenylsulphone is in solution in the solvent in an amount of less than 20 weight %, based on the total weight of the composition.

12. The composition as claimed in any one of the preceding claims, wherein the polyphenylsulphone is in solution in the solvent in an amount of at least 9 weight %, based on the total weight of the composition.

13. A method for applying a composition to a substrate, the method comprising
contacting a surface of a substrate with the composition as claimed in any one of the preceding claims, and
removing at least a portion of the solvent.

14. The method for coating a substrate as claimed in claim 13, the method comprising providing a casting medium as the substrate, contacting a surface of the casting medium with the composition as claimed in any one of claims 1 to 12, drying the composition to remove at least a portion of the solvent and, optionally removing the casting medium.

15. An article prepared by the method according to any one of claims 13 and 14.

16. An article comprising a substrate having a surface and a coating of polyphenylsulphone on the surface of the substrate.

17. The article as claimed in claim 15 or 16, wherein the article comprises a container having an inner surface coated with polyphenylsulphone.

18. The article as claimed in claim 17, wherein the container is a medicament container.

19. The article as claimed in claim 18 wherein the container is a metered dose inhaler canister.

20. The article as claimed in any one of claims 15 to 19, wherein the article comprises a valve and wherein the coating of polyphenylsulphone is on a surface of the valve.

21. The article as claimed in any one of claims 15 to 20, wherein the article comprises a ferrule connecting a valve to a container, wherein the coating of polyphenylsulphone is on a surface of the ferrule.

22. The article as claimed in any one of claims 18 to 21, wherein the container contains a medicament.

23. The article as claimed in any one of claims 18 to 22, wherein the container contains a non-CFC propellant composition.

24. The article as claimed in any one of claims 18 to 23, wherein the container contains an acid.
